# FASCICULE DE BREVET EUROPEEN

(11) **EP 0 504 032 B1**
(45) Date de publication et mention de la délivrance du brevet: **24.07.1996**
(21) Numéro de dépôt: 92400610.9
(22) Date de dépôt: 10.03.1992
(51) Int. Cl.: F16K 5/06, F16K 35/14

(54) **Vanne redondée à la fermeture**
Redundant Schlussventil
Redundant closing valve

(30) Priorité: 15.03.1991 FR 9103221
(43) Date de publication de la demande: 16.09.1992
(73) Titulaire: SOCIETE EUROPEENNE DE PROPULSION, F-92150 Suresnes (FR)
(72) Inventeur: Delange, Laurent, F-27620 Gasny (FR)
(74) Mandataire: Thévenet, Jean-Bruno

(56) Documents cités:
- FR-A- 2 441 775
- US-A- 4 568 061

## Description

### Domaine de l'invention :

La présente invention concerne une vanne redondée à la fermeture, c'est-à-dire une vanne dans laquelle les probabilités d'ouverture ou de non fermeture accidentelle de la vanne sont sensiblement moindres que la probabilité de non réponse à une commande d'ouverture, laquelle doit être elle-même très faible, et qui peut être utilisée dans différents domaines tels que notamment l'industrie nucléaire, la chimie des produits toxiques ou corrosifs, le domaine spatial et l'aéronautique. Si l'on prend par exemple le cas de l'alimentation d'une installation par un fluide dangereux, les risques associés à une non fermeture de vanne en cas de fuite dans l'installation, sont sensiblement plus grands que ceux associés à une non réponse à une commande d'ouverture de cette même vanne, qui se traduit par un simple retard de mise en service.

### Art antérieur :

Dans certaines installations hydrauliques nécessitant une sécurité accrue, il est fréquent de prévoir des dispositions empêchant la mise en action accidentelle ou non autorisée d'une circulation de fluide dans une conduite en montant deux vannes en série sur cette conduite afin d'assurer une redondance à la fermeture en cas de panne dans le processus de fermeture de l'une des vannes. La demande de brevet français 2 441 775 décrit un ensemble de deux vannes montées en série sur la conduite forcée amont d'une machine hydraulique et constitue un exemple de cet art antérieur. Le document US-A-4 568 061 décrit une vanne selon le préambule de la revendication 1.

Un tel montage de deux vannes en série est utilisé dans le domaine spatial sur certains lanceurs, ainsi que sur les centrales nucléaires.

L'encombrement important que constitue un tel ensemble de deux vannes est un inconvénient auquel s'ajoute celui d'une masse double de celle d'une vanne unique. En outre, la présence de deux vannes nécessite un montage plus complexe que dans le cas d'une seule vanne et de ce fait augmente le coût de l'installation.

On a également proposé d'utiliser une vanne unique avec un seul boisseau, dont la partie commande est redondée. Des vannes principales de navette spatiale utilisent ainsi une commande hydraulique redondée qui agit sur un actionneur unique.

De tels types de vanne ne permettent toutefois pas d'empêcher des pannes à la fermeture lorsque l'actionneur unique est lui-même défaillant.

Une redondance complète a déjà été proposée, par exemple dans le cas du module lunaire d'Apollo, à l'aide d'un système comprenant un groupe de quatre vannes agencées en deux circuits parallèles comportant chacun deux vannes en série.

Dans ce cas, l'ensemble du système comprend quatre corps de vanne, ce qui conduit à un encombrement et une complexité excessifs.

### Objet et description succincte de l'invention :

L'invention a donc essentiellement pour objet de remédier aux inconvénients précités et de pouvoir satisfaire aux exigences de sécurité requises tout en réduisant l'encombrement, la masse et le coût de montage.

L'invention a encore pour objet de réaliser une vanne unique dont l'utilisation est simplifiée.

La présente invention a encore pour objet une vanne dont le système d'étanchéité est agencé de telle façon qu'il ne permette pas le confinement de certains volumes de liquide véhiculés à l'intérieur du corps de vanne, et de plus limite les frottements, réduisant ainsi l'usure des moyens d'étanchéité.

Ces buts sont atteints grâce à une vanne redondée à la fermeture comprenant un corps de vanne unique, des premier et deuxième boisseaux disposés à l'intérieur dudit corps de vanne, et comportant chacun un orifice permettant le passage du fluide, des premier et deuxième moyens indépendants d'entraînement en rotation des premier et deuxième boisseaux et un premier dispositif d'étanchéité coopérant avec l'un des premier et deuxième boisseaux, caractérisée en ce que les premier et deuxième boisseaux sont tous deux creux, sensiblement hémisphériques, imbriqués l'un dans l'autre et présentent des diamètres différents, et en ce qu'elle comprend des premier et deuxième dispositifs d'étanchéité comprenant chacun au moins un joint annulaire et associés respectivement aux premier et deuxième boisseaux.

La vanne redondée à la fermeture selon l'invention, par la présence d'un corps de vanne unique renfermant deux boisseaux creux, concentriques, de taille différente et imbriqués, commandés par deux actionneurs indépendants, permet d'assurer une redondance à la fermeture de la vanne par la réalisation de deux étanchéités indépendantes, sans qu'il soit nécessaire de coupler en série deux vannes distinctes, ce qui contribue à réduire fortement la masse, l'encombrement et la complexité du montage, ces avantages étant particulièrement importants, notamment dans le domaine spatial ou l'aéronautique où la masse ou le volume embarqué doit être le plus réduit possible.

L'utilisation d'une vanne avec des fluides cryotechniques corrosifs ou toxiques impose de ne pas confiner le fluide à l'intérieur de la vanne.

Dans ce cas, il convient notamment de ne pas assurer simultanément l'étanchéité au niveau des deux boisseaux lors de la fermeture des deux boisseaux de la vanne et d'utiliser au moins un joint de boisseau rétractable.

Selon un premier mode principal de réalisation, les premier et deuxième dispositifs d'étanchéité sont rétractables et sont reliés par au moins une entretoise disposée à l'intérieur des premier et deuxième boisseaux, de telle sorte que lorsque l'un des premier et deuxième dispositifs d'étanchéité est ouvert, l'autre dispositif d'étanchéité est fermé.

Dans ce cas, selon une première variante de réalisation, les moyens de rétraction du dispositif d'étanchéité rétractable coopérant avec le premier boisseau disposé en amont sont commandés directement ou indirectement par la position de ce premier boisseau coopérant avec ce dispositif d'étanchéité.

De façon plus particulière, les moyens de rétraction du dispositif d'étanchéité rétractable coopérant avec le premier boisseau peuvent comprendre une came dont la position est définie par la position de ce premier boisseau coopérant avec ce dispositif d'étanchéité, le profil de la came étant tel que la fermeture du premier boisseau entraîne celle de ce dispositif d'étanchéité tandis que l'ouverture du premier boisseau entraîne celle de ce dispositif d'étanchéité.

Selon une deuxième variante de réalisation les moyens de rétraction du dispositif d'étanchéité rétractable coopérant avec le deuxième boisseau disposé en aval sont commandés directement ou indirectement par la position de ce deuxième boisseau coopérant avec ce dispositif d'étanchéité.

De la même manière que pour la première variante de réalisation, de façon plus particulière, les moyens de rétraction du dispositif d'étanchéité rétractable coopérant avec le deuxième boisseau peuvent comprendre une came dont la position est définie par la position de ce deuxième boisseau coopérant avec ce dispositif d'étanchéité, le profil des cames étant tel que la fermeture du deuxième boisseau entraîne celle de ce dispositif d'étanchéité tandis que l'ouverture du deuxième boisseau entraîne celle de ce dispositif d'étanchéité.

Selon un deuxième mode principal de réalisation, l'un des dispositifs d'étanchéité n'est pas rétractable, et comprend un joint d'étanchéité constitué par un joint à lèvre, tandis que l'autre des premier et deuxième dispositifs d'étanchéité est rétractable, et des moyens de rétraction de ce dispositif d'étanchéité rétractable sont prévus pour éviter le confinement de fluide à l'intérieur de la vanne.

Dans ce cas, selon une première variante de réalisation le dispositif d'étanchéité rétractable est situé au voisinage du premier boisseau disposé du côté amont et se trouve commandé en fonction de la position du deuxième boisseau disposé du côté aval de telle sorte que ledit dispositif d'étanchéité rétractable soit en position fermée quand le deuxième boisseau est ouvert et vice versa.

De façon plus particulière, la vanne peut comprendre une came solidaire du deuxième boisseau pour commander la rétraction du dispositif d'étanchéité rétractable situé au voisinage du premier boisseau.

Selon une deuxième variante de réalisation, le dispositif d'étanchéité rétractable est situé au voisinage du deuxième boisseau disposé du côté aval et se trouve commandé en fonction de la position du premier boisseau disposé du côté amont de telle sorte que ledit dispositif d'étanchéité rétractable soit en position fermée quand le premier boisseau est ouvert et vice versa.

De façon plus particulière, de la même manière, que pour la première variante, la vanne peut comprendre une came solidaire du premier boisseau pour commander la rétraction du dispositif d'étanchéité rétractable situé au voisinage du deuxième boisseau .

Dans les diverses variantes de réalisation des premier et deuxième modes principaux de réalisation, lorsqu'il n'est pas utilisé de came solidaire du premier ou deuxième boisseau pour commander la rétraction d'un dispositif d'étanchéité rétractable, la commande de rétraction des dispositifs d'étanchéité peut être effectuée par une commande par des actionneurs spécifiques ne recevant pas leur énergie de l'un ou l'autre des boisseaux, tels que des moyens de commande mécanique, hydraulique, pneumatique, électrique ou pyrotechnique.

De tels actionneurs peuvent être inclus dans la vanne.

Un ou plusieurs capteurs de pression peuvent être prévus dans des tronçons de conduite d'entrée ou de sortie de la vanne, à proximité des boisseaux, pour piloter la commande de la rétraction des dispositifs d'étanchéité.

La commande de la rétraction des dispositifs d'étanchéité peut également être pilotée par des capteurs de position des boisseaux.

Les capteurs peuvent être commandés par tout organe solidaire de l'ensemble tournant, comprenant boisseau, arbre et rotor d'un dispositif de commande.

En vue de limiter les frottements des joints sur les boisseaux, il est avantageux que les dispositifs d'étanchéité, qu'ils soient ou non rétractables pour éviter le confinement, puissent temporairement, au moins pendant la rotation des boisseaux, subir un décollement, c'est à dire être légèrement écartés pour ne plus être en contact avec les boisseaux avec lesquels ils coopèrent. Les moyens utilisés pour commander les décollements peuvent ou non être confondus avec les moyens utilisés pour commander la rétraction plus importante des joints destinée à éviter le confinement.

Les axes de rotation des premier et deuxième boisseaux peuvent être confondus, bien que les moyens d'entraînement en rotation soient eux-mêmes indépendants, ou distincts, ce qui peut encore améliorer la fiabilité par l'indépendance des axes des mouvements.

Les premier et deuxième moyens d'entraînement en rotation des premier et deuxième boisseaux peuvent être situés du même côté du corps de la vanne ou sur deux côtés diamétralement opposés du corps de la vanne.

La vanne peut comprendre des tronçons de conduite d'entrée et de sortie de fluide qui sont coaxiaux ou présentent des directions différentes.

Selon un mode particulier de réalisation, la vanne comprend un dispositif de contrôle déclenchant la commande de fermeture de l'un des premier et deuxième boisseaux avec un retard prédéterminé par rapport à la commande de fermeture de l'autre boisseau, et à condition que la non fermeture de cet autre boisseau ait été détectée à la fin de ce retard prédéterminé.

Dans ce cas, le confinement n'est pas possible puisque les deux boisseaux ne peuvent être fermés simultanément, de sorte que des dispositifs provoquant une rétraction importante des joints, ne sont pas nécessaires. Il est toutefois avantageux, comme indiqué précédemment, que les joints présentent un léger écartement, c'est à dire se décollent, pendant la rotation des boisseaux pour éviter les frottements.

La résistance mécanique des boisseaux peut être augmentée pour permettre un fonctionnement sous forte pression, soit par l'utilisation de boisseaux massifs, d'épaisseur importante, soit par la mise en oeuvre de raidisseurs ou plus particulièrement, de raidisseurs entrecroisés constituant un caissonnage.

L'invention concerne encore un dispositif totalement redondant, à la fermeture comme à l'ouverture, pour la commande du passage de fluide dans une canalisation principale, ce dispositif comprenant l'insertion, dans le circuit de ladite canalisation principale, d'un circuit comprenant deux branches en parallèle équipées chacune d'une vanne redondée à la fermeture.

### Brève description des dessins :

D'autres caractéristiques et avantages de l'invention ressortiront de la description suivante de modes particuliers de réalisation donnés à titre d'exemples nullement limitatifs, en référence aux dessins annexés, sur lesquels :
- La figure 1 est une vue en coupe axiale verticale d'une vanne suivant l'invention selon la ligne I-I de la figure 2, les boisseaux étant en position fermée,
- La figure 2 est une vue de dessus de la même vanne en coupe axiale selon la ligne II-II de la figure 1, les boisseaux étant en position ouverte,
- La figure 3 est une vue de dessus avec arrachement d'un exemple de porte-joint et d'une came d'actionnement utilisables dans une vanne selon l'invention.
- La figure 4 est une demi-coupe verticale montrant un exemple de mise en oeuvre de la commande de rétraction du porte-joint de la figure 3,
- La figure 5 est une vue de dessus en coupe axiale d'une vanne en position fermée, selon l'invention montrant une entretoise qui solidarise les deux joints dans certains modes de réalisation particuliers,
- les figures 6 et 7 sont des vues de dessus en coupe axiale montrant des variantes schématiques de la vanne conforme à l'invention, en position ouverte,
- La figure 8 est une vue en coupe axiale verticale analogue à la figure 1, mais montrant un autre mode de réalisation de la commande des boisseaux,
- La figure 9 est une coupe verticale d'un boisseau convenant à la vanne de la présente invention, selon la ligne IX-IX de la figure 10,
- La figure 10 est une vue de dessus du boisseau en coupe selon la ligne X-X de la figure 9,
- La figure 11 est une vue schématique en coupe axiale verticale montrant l'association en parallèle de deux vannes selon l'invention, et
- la figure 12 est une vue analogue à celle de la figure 5, avec une entretoise solidarisant les deux joints, mais correspondant à une variante de réalisation.

### Description détaillée de modes particuliers de réalisation :

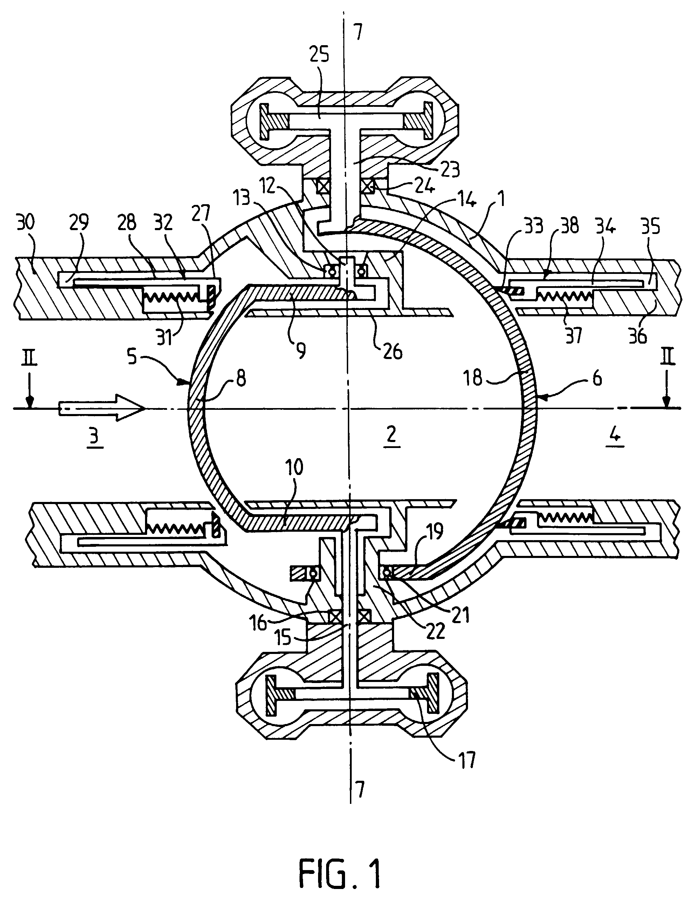

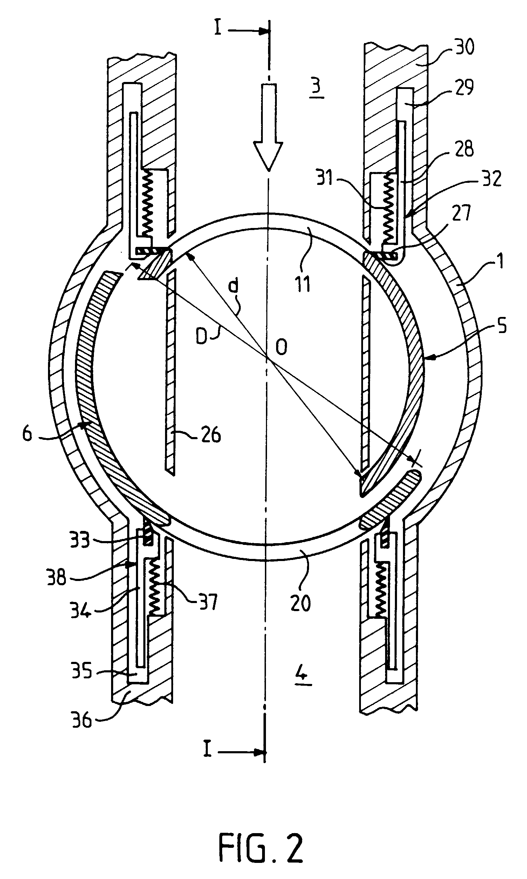

Un exemple de vanne selon l'invention, représentée sur la figure 1, comprend un corps 1 muni d'une cavité sphérique 2 dans laquelle débouchent une conduite amont 3 d'arrivée de fluide et une conduite aval 4 de sortie de fluide. Dans le mode de réalisation de la figure 1, les deux conduites 3 et 4 sont coaxiales et ont des formes et des dimensions identiques. A l'intérieur de la cavité 2, deux boisseaux 5 et 6 peuvent tourner autour d'un axe commun perpendiculaire à l'axe des conduites 3,4. Le boisseau 5 comprend une zone centrale sphérique 8 prolongée par deux zones aplaties opposées et parallèles 9 et 10. La zone sphérique 8 comporte un orifice 11 (figure 2) de forme et de dimension identiques à celles de la conduite 3. La zone aplatie 9 comporte un tourillon 12 monté tournant autour de l'axe 7 par l'intermédiaire d'un roulement à billes 13 sur un support 14 solidaire du corps 1. La zone aplatie opposée 10 comporte un axe 15 monté tournant autour de l'axe 7 par l'intermédiaire d'un palier étanche 16 monté directement sur le corps 1. L'axe 15 porte à son extrémité un dispositif de commande 17 de forme et de dimensions appropriées. Le dispositif de commande 17 du boisseau 5 peut être constitué par tout type connu de dispositif automatique de commande, mécanique, hydraulique ou électrique.

Le boisseau 6 comprend une zone sphérique 18 prolongée par une zone aplatie 19. La zone sphérique 18, qui présente un diamètre plus grand que celui de la zone sphérique 8 du boisseau 5 de façon à pouvoir pivoter dans une zone extérieure à celle du boisseau 5, ainsi imbriqué dans le boisseau 6, comporte un orifice 20 (figure 2) de forme et de dimensions identiques à celles de la conduite 4. La zone aplatie 19 est montée tournante autour de l'axe 7 par l'intermédiaire d'un palier 21 sur un prolongement 22 du corps 1. Le boisseau 6 comporte à son extrémité diamétralement opposée à la zone aplatie 19, un axe 23 monté tournant autour de l'axe 7 par l'intermédiaire d'un palier étanche 24 sur le corps 1. L'axe 23 porte à son extrémité un dispositif de commande 25 de configuration appropriée analogue au dispositif 17. Le dispositif de commande 25 du boisseau 6 peut ainsi également être constitué par tout type connu de dispositif automatique de commande, mécanique, hydraulique ou électrique. A l'intérieur de la cavité 2, il est prévu un tronçon de conduite 26 de forme et de dimensions identiques aux conduites 3 et 4. Ce tronçon de conduite 26 est solidaire du corps 1 par l'intermédiaire du support 14 et du prolongement 22. Ce tronçon de conduite 26 est destiné à assurer la continuité de la veine fluide lorsque la vanne est ouverte. Le boisseau 5 coopère avec un joint d'étanchéité 27 qui peut par exemple être un joint à lèvre. Le joint 27 est fixé sur un porte-joint 28 en forme de manchon monté coulissant dans une gorge 29 de la paroi 30 de la conduite 3. Un soufflet 31 fixé à une de ses extrémités à la paroi 30 et à l'autre de ses extrémités au porte-joint 28 assure l'étanchéité. L'ensemble constitué par le porte-joint 28 et le joint 27 forme le dispositif d'étanchéité 32 associé au boisseau 5.

Le boisseau 6 coopère avec un joint d'étanchéité 33 qui peut être par exemple un joint à lèvre. Le joint 33 est fixé sur un porte-joint 34 en forme de manchon monté coulissant dans une gorge 35 de la paroi 36 de la conduite 4. Un soufflet 37 fixé à une de ses extrémités à la paroi 36 et à l'autre de ses extrémités au porte-joint 34 assure l'étanchéité. L'ensemble constitué par le porte-joint 34 et le joint 33 forme le dispositif d'étanchéité 38 associé au boisseau 6.

Le diamètre d du boisseau 5 est inférieur au diamètre D du boisseau 6 (figure 2). Ainsi, lorsque se produit un mouvement relatif entre les boisseaux autour du point 0, le boisseau 5 s'imbrique dans le boisseau 6. Cette disposition, et la présence de deux dispositifs de commande indépendants 17 et 25 des boisseaux 5 et 6 permet à chacun des boisseaux d'assurer la fermeture de la vanne quelle que soit la position de l'autre boisseau. En outre, le sens de rotation de chacun des boisseaux est indifférent. L'actionnement successif ou simultané des deux boisseaux en position d'obturation de la veine fluide rend possible une fermeture redondante de la vanne.

Les dispositifs d'étanchéité 32 et 38 peuvent comprendre des joints fixes frottants. Toutefois, selon une caractéristique avantageuse de la présente invention, chaque joint 27,33 fait l'objet d'un décollement, c'est à dire est légèrement écarté du boisseau 5,6 avec lequel il coopère, pendant la rotation de ce boisseau. Cette disposition présente l'avantage d'éviter le frottement du joint 27, 33 sur le boisseau 5, 6 en mouvement et de ce fait de limiter l'usure de ce joint 27, 33. Une came montée sur l'axe de rotation de chacun des deux boisseaux commande la rétraction du dispositif d'étanchéité 32, 38 lors de la rotation du boisseau 5, 6 auquel il est associé. Si les joints 27, 33 sont constitués par des joints fixes, ceux-ci sont appliqués sur le boisseau correspondant 5,6 dans sa position de fermeture, et éventuellement dans sa position d'ouverture. Si en revanche les joints 27, 33 sont conçus de façon à être rétractables en vue d'éviter un confinement du fluide à l'intérieur de la vanne, les joints 27, 33 sont sélectivement mis en contact ou non avec les boisseaux correspondants comme cela sera explicité ci-dessous.

L'utilisation d'une vanne selon l'invention dans un circuit de circulation de fluides cryotechniques impose de ne pas confiner ce fluide à l'intérieur de la vanne. Plus précisément, il ne faut en aucun cas qu'un volume de fluide reste enfermé dans la cavité 2 entre les boisseaux 5 et 6 en position d'obturation sans communication avec l'une des conduites 3 ou 4.

Si l'on procède à une analyse de la fonction de rétraction des joints 27, 33 pour la réalisation de la fonction de non confinement du liquide dans la vanne selon l'invention en position fermée, on relève en dehors du cas très hypothétique ou aucun boisseau 5, 6 ne se fermerait et où la fonction de non confinement n'a naturellement pas de sens, trois états possibles dans lesquels la vanne peut se trouver lors d'une commande de fermeture.

Dans un premier état possible, le boisseau amont se ferme, tandis que le boisseau aval ne se ferme pas. Dans ce cas, le joint du boisseau amont doit être fermé pour assurer l'étanchéité de la vanne, c'est à dire qu'il doit être libéré pour venir appuyer sur ce boisseau amont. Le joint du boisseau aval peut être ouvert ou fermé. Il n'y a pas de risque de confinement, puisque le liquide contenu dans la vanne est évacué par la canalisation de sortie.

Dans un second état possible, le boisseau amont ne se ferme pas, tandis que le boisseau aval se ferme. Dans ce cas, le joint du boisseau amont peut être ouvert ou fermé. Il n'y a pas de risque de confinement, puisque le liquide contenu dans la vanne est en continuité avec celui contenu dans la canalisation d'entrée.

En revanche, le joint du boisseau aval doit être fermé pour assurer l'étanchéité de la vanne.

Dans un troisième état possible, qui constitue le cas le plus fréquent en pratique, les deux boisseaux se ferment. Le non confinement peut alors être réalisé de deux manières différentes :

Selon une première manière, le joint du boisseau amont est fermé pour assurer l'étanchéité de la vanne tandis que le joint du boisseau aval est ouvert, pour assurer le non confinement, par évacuation du contenu de la vanne dans la canalisation de sortie.

Selon une deuxième manière, le joint du boisseau amont est ouvert, pour assurer le non confinement par continuité entre l'intérieur de la vanne et la canalisation amont, tandis que le joint du boisseau aval est fermé pour assurer l'étanchéité de la vanne.

Le non confinement peut ainsi être réalisé dans ce troisième état possible de la vanne soit par continuité avec la canalisation amont soit par évacuation aval. Le choix de l'une ou l'autre des variantes de réalisation dépend du fluide véhiculé (nature, température, pression du gaz se trouvant dans la canalisation aval en position vanne fermée), et des matériaux employés pour construire la vanne.

La commande de la rétraction des dispositifs d'étanchéité peut être assurée par une commande extérieure à la vanne, à l'aide d'actionneurs agissant de façon mécanique, hydraulique, électrique ou pyrotechnique et qui sont éventuellement pilotés par des capteurs de position des éléments constitutifs de la vanne, des capteurs de pression disposés dans les conduites de fluide au voisinage des boisseaux ou à partir d'une centrale de pilotage recevant toutes les informations utiles sur l'état du système.

Toutefois de façon préférentielle, le système de commande de la rétraction des dispositifs d'étanchéité est constitué par des moyens de commande mécanique internes à la vanne. Dans ce cas, quatre configurations différentes sont envisageables.

Selon une première configuration, illustrée sur les figures 1 et 2, l'un des joints est rétractable tandis que l'autre joint reste fixe (tout en pouvant toutefois éventuellement être légèrement écarté du boisseau correspondant pendant la rotation de ce dernier).

Dans le cas des figures 1 et 2, le joint aval 33 est fixe et le boisseau aval 6 commande les mouvements d'ouvertures (par rétraction) et de fermeture (contact avec le boisseau amont 5) du joint amont 27 de telle sorte que ce joint amont 27 soit fermé quand le boisseau aval 6 est ouvert (figure 2) et que ce joint amont 27 soit ouvert quand le boisseau aval 6 est fermé (figure 1).

Si le boisseau aval 6 est seul à être fermé, le boisseau amont 5 restant ouvert, le non confinement est assuré par l'amont, de même que dans le cas de la figure 1 où les deux boisseaux 5, 6 sont fermés. En revanche, si le boisseau amont 5 est le seul à être fermé, le boisseau aval 6 restant ouvert, le non confinement est assuré par l'aval.

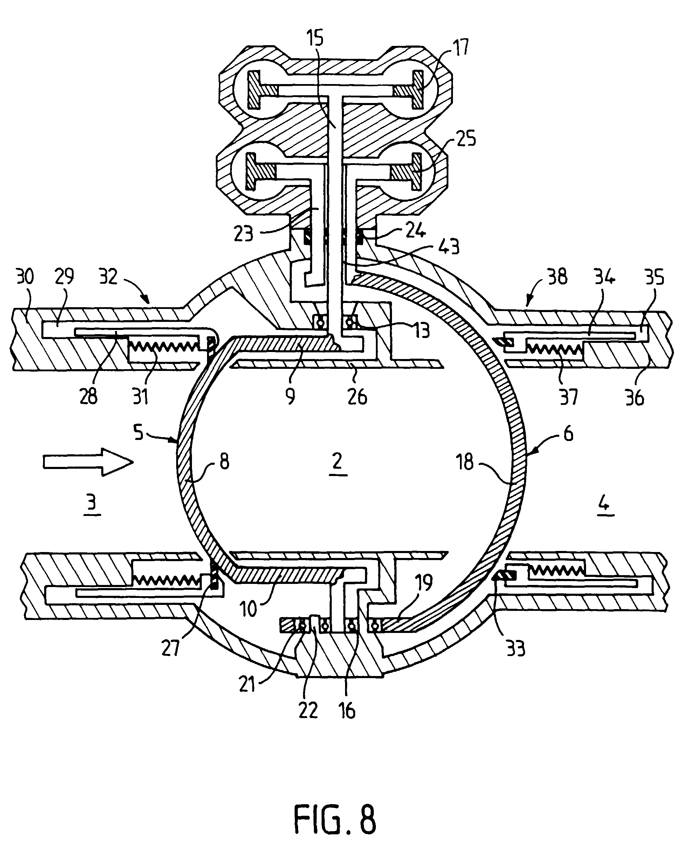

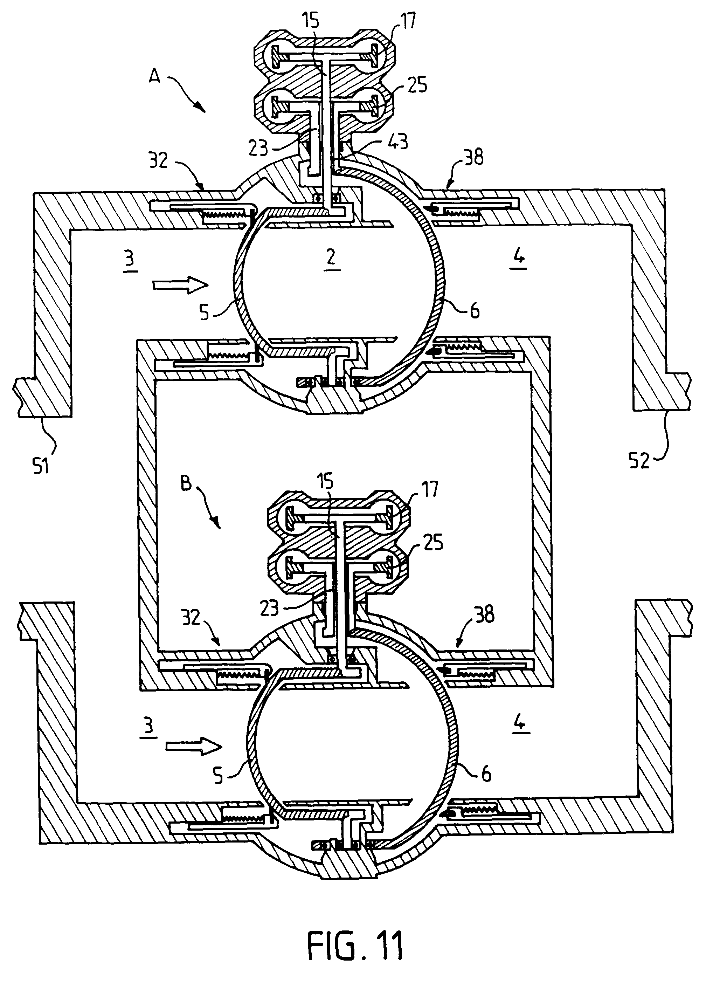

Une deuxième configuration possible pour obtenir, par une commande interne à la vanne, une rétraction sélective de l'un des joints, tandis que l'autre joint reste fixe (tout en pouvant éventuellement être non frottant, c'est à dire être légèrement écarté du boisseau correspondant pendant la rotation de ce dernier) est illustrée sur les figures 8 et 11. Cette configuration correspond à la configuration précédemment décrite, mais les rôles des joints et boisseaux amont et aval sont inversés.

Dans ce cas, le joint amont 27 est fixe et le boisseau amont 5 commande le dispositif d'étanchéité aval 38 comportant le joint aval 33 de telle sorte que ce joint aval 33 soit fermé quand le boisseau amont 5 est ouvert et que ce joint aval 33 soit ouvert quand le boisseau amont 5 est fermé.

Si le boisseau amont 5 est seul à être fermé, le boisseau aval 6 restant ouvert, le non confinement est assuré par l'aval, de même que lorsque les deux boisseaux 5, 6 sont fermés. En revanche, si le boisseau aval 6 est le seul à être fermé, le boisseau amont 5 restant ouvert, le non confinement est assuré par l'amont.

Dans la première configuration, une came (non représentée) peut être fixée sur l'axe du boisseau aval 6 pour la commande du dispositif d'étanchéité 32, qui comprend le joint 27 associé à l'autre boisseau 5, la came étant calée de telle façon que lorsque le boisseau aval 6 se ferme, elle commande l'ouverture du joint amont 27.

Dans la seconde configuration, une came (non représentée) peut être fixée sur l'axe du boisseau amont 5 pour la commande du dispositif d'étanchéité 38 qui comprend le joint 33 associé à l'autre boisseau 6, la came étant calée de telle façon que lorsque le boisseau amont 5 se ferme, elle commande l'ouverture du joint aval 33.

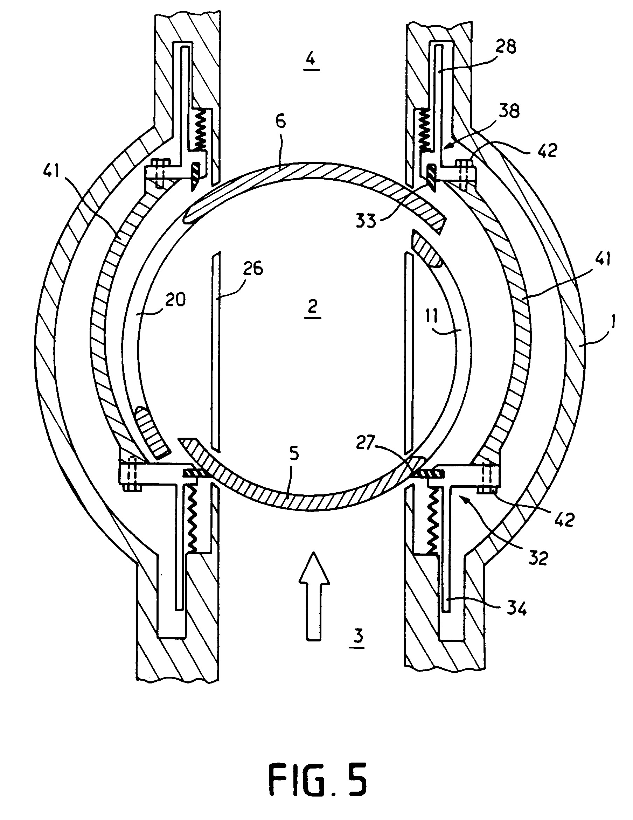

Selon une troisième configuration possible, illustrée sur la figure 5, une commande interne à la vanne visant à empêcher un confinement de fluide met en oeuvre deux joints rétractables.

Dans ce cas, les deux dispositifs d'étanchéité amont 32 et aval 38 sont solidarisés par une entretoise 41, de telle façon que lorsque le joint aval 33 est ouvert, le joint amont 27 est fermé et réciproquement.

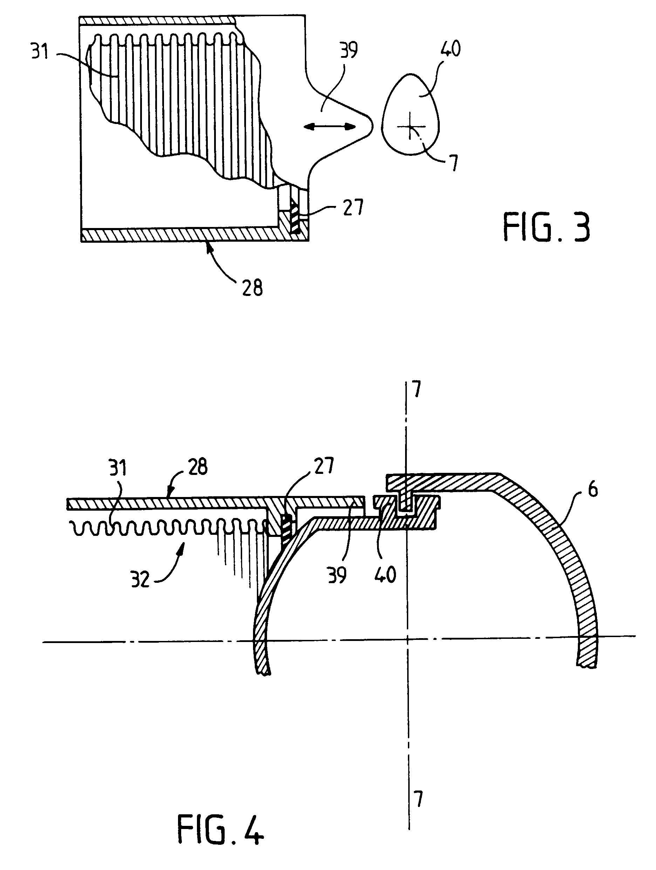

Le boisseau amont 5 porte seul, une came 40 (figure 3 et 4) qui agit sur une came 39 solidaire du dispositif d'étanchéité amont 32 pour commander les déplacements du joint amont 27. Le profil de la came 40 est tel que la fermeture du boisseau amont entraîne celle du joint 27 et vice versa.

Dans cette troisième configuration, si le boisseau amont 5 est le seul à être fermé, le boisseau aval 6 restant ouvert, de même que si les deux boisseaux 5,6 sont fermés simultanément, il est réalisé un non confinement par l'aval. En revanche, si le boisseau aval 6 est le seul à être fermé tandis que le boisseau amont 5 est resté ouvert, le non confinement est réalisé par l'amont.

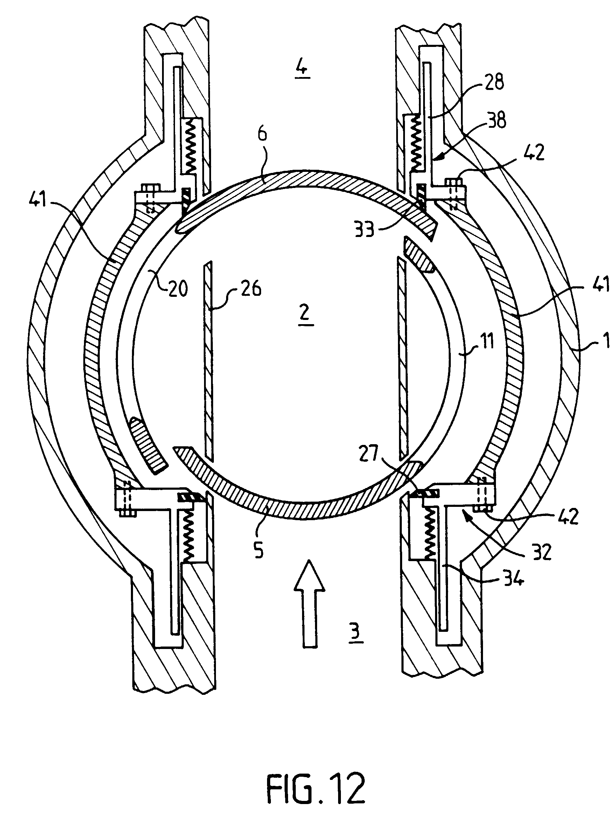

Une quatrième configuration possible, illustrée sur la figure 12, est semblable à la troisième configuration qui vient d'être décrite, mais avec une inversion des rôles des boisseaux et des joints amont et aval.

Dans ce cas, les deux dispositifs d'étanchéité amont 32 et aval 38 sont également solidarisés par une entretoise 41, de telle façon que lorsque le joint aval 33 est ouvert, le joint amont 27 est fermé et réciproquement.

Le boisseau aval 6 porte, seul, une came, semblable à la came 40 des figures 3 et 4, qui agit sur une came, semblable à la came 39 des figures 3 et 4, mais solidaire du dispositif d'étanchéité aval 38 pour commander les déplacements du joint aval 33. Le profil de la came est tel que la fermeture du boisseau aval 6 entraîne celle du joint aval 33 et vice versa.

Dans cette quatrième configuration, si le boisseau aval 6 est le seul à être fermé, le boisseau amont 5 restant ouvert, de même que si les deux boisseaux 5,6 sont fermés simultanément, il est réalisé un non confinement par l'amont. En revanche, si le boisseau amont 5 est le seul à être fermé tandis que le boisseau aval 6 est resté ouvert, le non confinement est réalisé en aval.

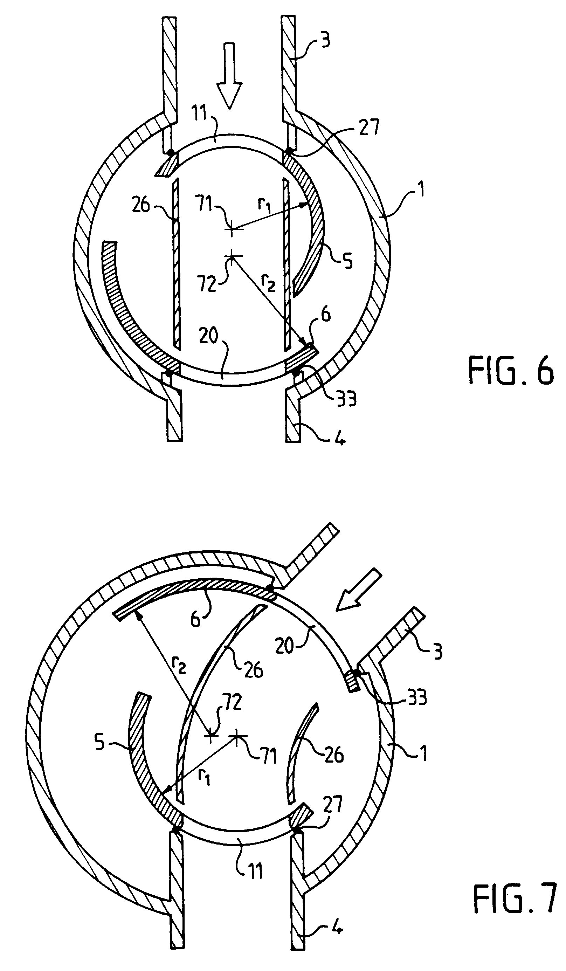

La figure 6 représente schématiquement un autre mode de réalisation de la présente invention. Dans cette forme de réalisation les axes de rotation des deux boisseaux emboîtés l'un dans l'autre ne sont pas confondus. Cette disposition permet d'améliorer la fiabilité de la vanne, les deux axes de mouvement des boisseaux étant totalement indépendants.

La figure 7 représente schématiquement un autre mode de réalisation de la présente invention. Dans cette forme de réalisation, les axes de rotation 71, 72 des deux boisseaux 5, 6 sont également distincts mais il ne s'agit pas là d'une obligation et ces axes peuvent également être confondus. En outre, les conduites 3,4 d'entrée et de sortie du fluide ne sont pas coaxiales ou ont des directions différentes. Dans ce cas, le tronçon de conduite 26 présente une forme adaptée pour assurer la continuité de la veine fluide.

Sur les figures 1, 2, 5 et 6, de même que sur la figure 8, on a représenté la conduite 3 d'amenée de fluide comme étant située du côté du boisseau 5 de petit diamètre tandis que le boisseau 6 de grand diamètre est situé du côté de la conduite 4 d'évacuation du fluide.

Le rôle des conduites 3 et 4 peut toutefois être inversé et sur la figure 7, on a aussi représenté une conduite 3 d'amenée de fluide qui est située du côté du boisseau 6 de grand diamètre tandis que la conduite 4 d'évacuation de fluide est située du côté du boisseau 5 de petit diamètre.

La figure 8 représente une variante de réalisation de la présente invention dans lequel les deux dispositifs 17 et 25 de commande de la rotation des boisseaux 5, 6 sont situés du même côté de la vanne et non plus de façon diamétralement opposée comme c'était le cas sur la figure 1. L'axe 23 est dans ce cas percé par un alésage 43 permettant le passage de l'axe 15. Les dispositifs de commande 17 et 25 peuvent commander, indépendamment l'un de l'autre, les mouvements des boisseaux 5 et 6.

Les dispositifs de commande 17 et 25 des boisseaux 5 et 6 représentés sur les figures 1, 8 et 11 peuvent être constitués par tout dispositif automatique de commande, mécanique, hydraulique, pneumatique ou électrique. En outre, il peut être prévu un dispositif de contrôle actif qui déclenche la commande de fermeture du boisseau 5 de petit diamètre avec un certain retard dans le seul cas où à la fin de ce retard prédéterminé, il a été détecté une non fermeture du boisseau nominal 6 de grand diamètre.

Les premier et deuxième boisseaux 5, 6 peuvent être commandés de façon à tourner dans le même sens ou dans des sens opposés, de façon contrarotative. Que les boisseaux 5,6 soient commandés de façon synchronisée ou décalée dans le temps, il est toutefois important que les moyens de commande 17 et 25 soient indépendants de telle sorte que l'on puisse toujours assurer la fermeture avec l'un quelconque des boisseaux quelle que soit la position de l'autre.

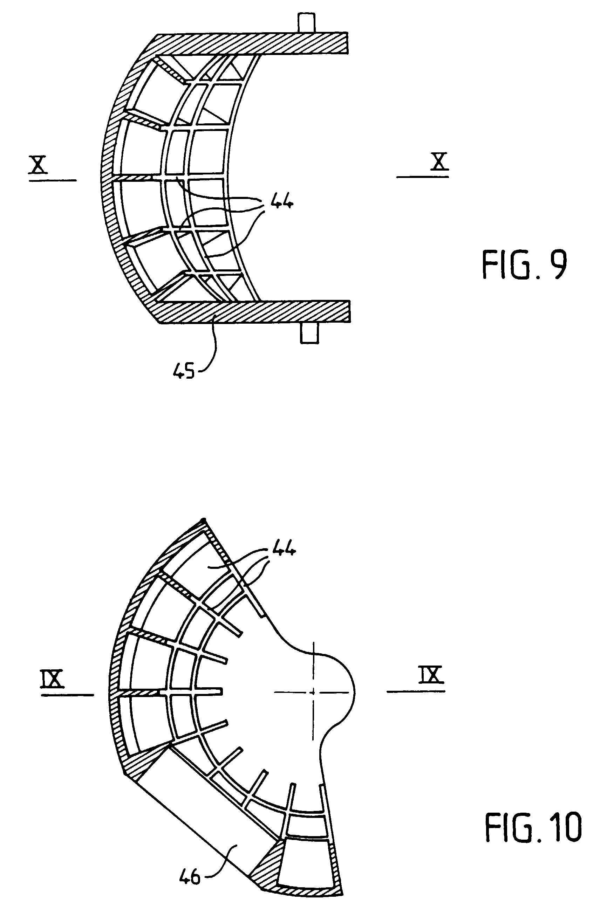

Le boisseau conforme à la présente invention représenté sur les figures 9 et 10 est prévu pour avoir une résistance mécanique accrue en cas de fonctionnement de la vanne dans un circuit soumis à des fortes pressions. Des raidisseurs 44 renforcent le corps du boisseau 45 pourvu d'une ouverture 46. Ces raidisseurs 44 s'ils s'entrecroisent permettent de réaliser un caissonnage renforçant le boisseau. Il est également possible de prévoir un boisseau massif d'épaisseur importante ayant la même résistance mécanique aux fortes pressions.

On a représenté sur la figure 11, le montage en parallèle de deux vannes redondées à la fermeture conformes à l'invention.

Ce montage permet, avec seulement deux vannes distinctes, c'est-à-dire deux corps de vanne, d'obtenir un fonctionnement avec redondance à l'ouverture et à la fermeture équivalent à celui de quatre vannes classiques, qui seraient réparties dans deux branches en parallèle comprenant chacune le montage série de deux vannes. Dans le cas des montages classiques assurant une redondance à l'ouverture et à la fermeture, il est toutefois nécessaire d'associer entre elles quatre vannes ayant chacune leur corps de vanne et leur dispositif d'actionnement, ce qui conduit à un montage complexe, tandis que la présente invention réduit la masse, l'encombrement et facilite l'installation compacte des dispositifs d'actionnement des boisseaux.

## Revendications

1. Vanne redondée à la fermeture, comprenant un corps de vanne (1) unique, des premier et deuxième boisseaux (5, 6) disposés à l'intérieur dudit corps de vanne (1), et comportant chacun un orifice (11, 20) permettant le passage du fluide, des premier et deuxième moyens indépendants (17, 25) d'entraînement en rotation des premier et deuxième boisseaux (5, 6) et un premier dispositif d'étanchéité coopérant avec l'un des premier et deuxième boisseaux (5, 6), caractérisée en ce que les premier et deuxième boisseaux (5, 6) sont tous deux creux, sensiblement hémisphériques, imbriqués l'un dans l'autre et présentent des diamètres différents, et en ce qu'elle comprend des premier et deuxième dispositifs d'étanchéité (32, 38) comprenant chacun au moins un joint annulaire (27, 33) et associés respectivement aux premier et deuxième boisseaux (5, 6).

2. Vanne selon la revendication 1, caractérisée en ce qu'elle comprend des moyens de décollement des premier et deuxième dispositifs d'étanchéité (32, 38) pendant la rotation des premier et deuxième boisseaux (5,6).

3. Vanne selon la revendication 1, caractérisée en ce que l'un des dispositifs d'étanchéité n'est pas rétractable, et comprend un joint d'étanchéité constitué par un joint à lèvre, tandis que l'autre des premier et deuxième dispositifs d'étanchéité (32, 38) est rétractable, et des moyens (39, 40, 41) de rétraction de ce dispositif d'étanchéité rétractable sont prévus pour éviter le confinement de fluide à l'intérieur de la vanne.

4. Vanne selon la revendication 3, caractérisée en ce que le dispositif d'étanchéité rétractable (32) est situé au voisinage du premier boisseau (5) disposé du côté amont et se trouve commandé en fonction de la position du deuxième boisseau (6) disposé du côté aval de telle sorte que ledit dispositif d'étanchéité rétractable (32) soit en position fermée quand le deuxième boisseau (6) est ouvert et vice versa.

5. Vanne selon la revendication 4, caractérisée en ce qu'elle comprend une came solidaire du deuxième boisseau (6) pour commander la rétraction du dispositif d'étanchéité rétractable (32) situé au voisinage du premier boisseau (5).

6. Vanne selon la revendication 3, caractérisée en ce que le dispositif d'étanchéité rétractable (38) est situé au voisinage du deuxième boisseau (6) disposé du côté aval et se trouve commandé en fonction de la position du premier boisseau (5) disposé du côté amont de telle sorte que ledit dispositif d'étanchéité rétractable (38) soit en position fermée quand le premier boisseau (5) est ouvert et vice versa.

7. Vanne selon la revendication 6, caractérisée en ce qu'elle comprend une came solidaire du premier boisseau (5) pour commander la rétraction du dispositif d'étanchéité rétractable (38) situé au voisinage du deuxième boisseau (6).

8. Vanne selon l'une quelconque des revendications 1 et 2 caractérisée en ce que les premier et deuxième dispositifs d'étanchéité (32,38) sont rétractables et sont reliés par au moins une entretoise (41) disposée à l'intérieur des premier et deuxième boisseaux (5,6), de telle sorte que lorsque l'un des premier et deuxième dispositifs d'étanchéité (32 ou 38) est ouvert, l'autre dispositif d'étanchéité (38 ou 32) est fermé.

9. Vanne selon la revendication 8, caractérisée en ce que les moyens (39,40) de rétraction du dispositif d'étanchéité (32) rétractable coopérant avec le premier boisseau (5) disposé en amont sont commandés directement ou indirectement par la position de ce premier boisseau (5) coopérant avec ce dispositif d'étanchéité (32).

10. Vanne selon la revendication 9 caractérisée en ce que les moyens (39,40) de rétraction du dispositif d'étanchéité (32) rétractable coopérant avec le premier boisseau (5) comprennent une came (40) dont la position est définie par la position de ce premier boisseau (5) coopérant avec ce dispositif d'étanchéité (32), le profil de la came (40) étant tel que la fermeture du premier boisseau (5) entraîne celle de ce dispositif d'étanchéité (32) tandis que l'ouverture du premier boisseau (5) entraîne celle de ce dispositif d'étanchéité (32).

11. Vanne selon la revendication 8, caractérisée en ce que les moyens de rétraction du dispositif d'étanchéité (38) rétractable coopérant avec le deuxième boisseau (6) disposé en aval sont commandés directement ou indirectement par la position de ce deuxième boisseau (6) coopérant avec ce dispositif d'étanchéité (38).

12. Vanne selon la revendication 11 caractérisée en ce que les moyens de rétraction du dispositif d'étanchéité (38) rétractable coopérant avec le deuxième boisseau (6) comprennent une came dont la position est définie par la position de ce deuxième boisseau (6) coopérant avec ce dispositif d'étanchéité (38), le profil de la came étant tel que la fermeture du deuxième boisseau (6) entraîne celle de ce dispositif d'étanchéité (38) tandis que l'ouverture du deuxième boisseau (6) entraîne celle de ce dispositif d'étanchéité (38).

13. Vanne selon l'une quelconque des revendications 4,6,9 et 11 caractérisée en ce que la commande de rétraction des dispositifs d'étanchéité (32,38) est effectuée par une commande par des actionneurs spécifiques ne recevant pas leur énergie de l'un ou l'autre des boisseaux, tels que des moyens de commande mécanique, hydraulique, pneumatique, électrique ou pyrotechnique.

14. Vanne selon la revendication 13, caractérisée en ce qu'elle comprend au moins un capteur de pression situé dans un tronçon de conduite d'entrée ou de sortie, à proximité de l'un des premier et deuxième boisseaux, pour piloter la commande de la rétraction des dispositifs d'étanchéité (32,38).

15. Vanne selon la revendication 13, caractérisée en ce qu'elle comprend des capteurs de position des boisseaux pilotant la commande de la rétraction des dispositifs d'étanchéité (32,38).

16. Vanne selon l'une quelconque des revendications 1 à 15 caractérisée en ce que les axes de rotation (71,72) des premier et deuxième boisseaux (5,6) sont distincts tout en étant proches l'un de l'autre.

17. Vanne selon l'une quelconque des revendications 1 à 15, caractérisée en ce que les premier et deuxième boisseaux (5,6) présentent des axes de rotation (7) confondus.

18. Vanne selon l'une quelconque des revendications 1 à 17 caractérisée en ce qu'elle comprend des tronçons de conduite d'entrée et de sortie de fluide (3,4) qui sont coaxiales.

19. Vanne selon l'une quelconque des revendications 1 à 17 caractérisée en ce qu'elle comprend des tronçons de conduite d'entrée et de sortie de fluide (3,4) présentant des directions différentes.

20. Vanne selon l'une quelconque des revendications 1 à 19 caractérisée en ce que les premier et deuxième moyens (17,25) d'entraînement en rotation des premier et deuxième boisseaux (5,6) sont situés sur des côtés du corps (1) de la vanne diamétralement opposés.

21. Vanne selon l'une quelconque des revendications 1 à 19 caractérisée en ce que les premier et deuxième moyens (17,25) d'entraînement en rotation des premier et deuxième boisseaux (5,6) sont situés du même côté du corps (11) de la vanne.

22. Vanne selon la revendication 1 caractérisée en ce qu'elle comprend un dispositif de contrôle déclenchant la commande de fermeture de l'un (5) des premier et deuxième boisseaux avec un retard prédéterminé par rapport à la commande de fermeture de l'autre boisseau (6), et à condition que la non fermeture de cet autre boisseau (6) ait été détectée à la fin de ce retard prédéterminé.

23. Vanne selon la revendication 1 caractérisée en ce que les premier et deuxième boisseaux (5,6) sont des boisseaux d'épaisseur approximativement constante, et à parois lisses.

24. Vanne selon la revendication 1 caractérisée en ce que les premier et deuxième boisseaux (5,6) possèdent des raidisseurs (44).

25. Vanne selon la revendication 24 caractérisée en ce que les premier et deuxième boisseaux (5,6) possèdent des raidisseurs (44) entrecroisés constituant un caissonnage.

26. Dispositif redondant de commande du passage de fluide dans une canalisation principale, caractérisé en ce qu'il comprend l'insertion, dans le circuit de ladite canalisation principale (51,52) d'un circuit comprenant deux branches en parallèle (A, B) équipées chacune d'une vanne redondée à la fermeture selon l'une quelconque des revendications 1 à 25.

## Patentansprüche

1. Redundanz-Absperrventil mit einem einzigen Ventilgehäuse (1), einem ersten und zweiten Ventilküken (5, 6), die im Inneren des genannten Ventilgehäuses (1) angeordnet sind, von denen jedes eine Öffnung (11, 20) aufweist, die den Durchtritt des Strömungsmittels gestattet, ersten und zweiten unabhängigen Mitteln (17, 25) zum Drehantrieb des ersten und zweiten Kükens (5, 6) sowie einer ersten Abdichtvorrichtung, die mit dem ersten oder zweiten Küken (5, 6) zusammenwirkt, dadurch **gekennzeichnet**, daß das erste und zweite Küken (5, 6) alle beide hohl sind, im wesentlichen halbkugelig sind, ineinander verschachtelt sind und unterschiedliche Durchmesser aufweisen, und daß es eine erste und zweite Abdichtvorrichtung (32, 38) aufweist, die jeweils eine Ringdichtung (27, 33) aufweisen und dem ersten bzw. zweiten Küken (5, 6) zugeordnet sind.

2. Ventil nach Anspruch 1, dadurch **gekennzeichnet**, daß es Mittel zum Abheben der ersten und zweiten Abdichtvorrichtung (32, 38) während der Drehung des ersten und zweiten Kükens (5, 6) aufweist.

3. Ventil nach Anspruch 1, dadurch **gekennzeichnet**, daß eine der Abdichtvorrichtungen nicht zurückziehbar ist und eine Dichtung aufweist, die von einer Lippendichtung gebildet ist, während die andere der ersten und zweiten Abdichtvorrichtungen (32, 38) zurückziehbar ist, und daß Mittel (39, 40, 41) zum Zurückziehen dieser zurückziehbaren Abdichtvorrichtung vorgesehen sind, um das Einschließen von Strömungsmittel im Inneren des Ventiles zu vermeiden.

4. Ventil nach Anspruch 3, dadurch **gekennzeichnet**, daß die zurückziehbare Abdichtvorrichtung (32) in der Nähe des ersten Kükens (5) gelegen ist, das auf der stromaufwärts gelegenen Seite angeordnet ist, und in Funktion der Lage des zweiten Kükens (6) gesteuert wird, das auf der stromabwärts gelegenen Seite angeordnet ist, und zwar derart, daß die genannte, zurückziehbare Abdichtvorrichtung (32) sich in geschlossener Lage befindet, wenn das zweite Küken (6) offen ist, und umgekehrt.

5. Ventil nach Anspruch 4, dadurch **gekennzeichnet**, daß es einen Nocken aufweist, der fest bzw. einstückig mit dem zweiten Küken (6) verbunden ist, um das zurückziehen der zurückziehbaren Abdichtvorrichtung (32) zu steuern, die dem ersten Küken (5) benachbart angeordnet ist.

6. Ventil nach Anspruch 3, dadurch **gekennzeichnet**, daß die zurückziehbare Abdichtvorrichtung (38) dem zweiten Küken (6) benachbart angeordnet ist, das auf der stromabwärts gelegenen Seite angeordnet ist, und in Funktion der Lage des ersten Kükens (5) gesteuert ist, das auf der stromaufwärts gelegenen Seite angeordnet ist, und zwar derart, daß die genannte, zurückziehbare Abdichtvorrichtung (38) sich in der geschlossenen Lage befindet, wenn das erste Küken (5) offen ist, und umgekehrt.

7. Ventil nach Anspruch 6, dadurch **gekennzeichnet**, daß es einen mit dem ersten Küken (5) einstückig bzw. fest verbundenen Nocken aufweist, um das Zurückziehen der zurückziehbaren Abdichtvorrichtung (38) zu steuern, die dem zweiten Küken (6) benachbart angeordnet ist.

8. Ventil nach irgendeinem der Ansprüche 1 und 2, dadurch **gekennzeichnet**, daß die erste und zweite Abdichtvorrichtung (32, 38) zurückziehbar sind und durch mindestens ein Distanzrohr bzw. eine Traverse (41) derart verbunden sind, die im Inneren des ersten und zweiten Kükens (5, 6) angeordnet ist, daß dann, wenn die eine der ersten und zweiten Abdichtvorrichtungen (32 oder 38) offen ist, die andere Abdichtvorrichtung (38 oder 32) geschlossen ist.

9. Ventil nach Anspruch 8, dadurch **gekennzeichnet**, daß die Mittel (39, 40) zum Zurückziehen der zurückziehbaren Abdichtvorrichtung (32), die mit dem ersten Küken (5) zusammenwirkt, das stromaufwärts angeordnet ist, unmittelbar oder mittelbar durch die Lage dieses ersten Kükens (5) gesteuert werden, das mit dieser Abdichtvorrichtung (32) zusammenwirkt.

10. Ventil nach Anspruch 9, dadurch **gekennzeichnet**, daß die Mittel (39, 40) zum Zurückziehen der zurückziehbaren Abdichtvorrichtung (32), die mit dem ersten Küken (5) zusammenwirkt, einen Nocken (40) aufweisen, dessen Lage durch die Lage dieses ersten Kükens (5) definiert ist, das mit dieser Abdichtvorrichtung (32) zusammenwirkt, wobei das Profil des Nockens (40) so ist, daß das Schließen des ersten Kükens (5) dieses dieser Abdichtvorrichtung (32) herbeiführt, während das Öffnen des ersten Kükens (5) dieses dieser Abdichtvorrichtung (32) herbeiführt.

11. Ventil nach Anspruch 8, dadurch **gekennzeichnet**, daß die Mittel zum Zurückziehen der zurückziehbaren Abdichtvorrichtung (38), die mit dem zweiten Küken (6) zusammenwirkt, das stromabwärts angeordnet ist, unmittelbar oder mittelbar durch die Lage dieses zweiten Kükens (6) gesteuert sind, das mit dieser Abdichtvorrichtung (38) zusammenwirkt.

12. Ventil nach Anspruch 11, dadurch **gekennzeichnet**, daß die Mittel zum Zurückziehen der zurückziehbaren Abdichtvorrichtung (38), die mit dem zweiten Küken (6) zusammenwirkt, einen Nocken aufweisen, dessen Lage durch die Lage dieses zweiten Kükens (6) definiert ist, das mit dieser Abdichtvorrichtung (38) zusammenwirkt, wobei das Profil des Nokkens so ist, daß das Schließen des zweiten Kükens (6) dieses dieser Abdichtvorrichtung (38) herbeiführt, während das Öffnen des zweiten Kükens (6) dieses dieser Abdichtvorrichtung (38) herbeiführt.

13. Ventil nach irgendeinem der Ansprüche 4, 6, 9 und 11, dadurch **gekennzeichnet**, daß die Steuerung zum Zurückziehen der Abdichtvorrichtungen (32, 38) durch eine Steuerung durch spezielle Betätigungseinrichtungen bewirkt wird, die ihre Energie nicht von dem einen oder anderen der Küken empfangen, wie etwa mechanische, hydraulische, pneumatische, elektrische oder pyrotechnische Steuermittel.

14. Ventil nach Anspruch 13, dadurch **gekennzeichnet**, daß es mindestens einen Druckmeßfühler aufweist, der in einem Eintritts- oder Austritts-Leitungsstück in der Nähe des einen von erstem oder zweitem Küken angeordnet ist, um die Steuerung des Zurückziehens der Abdichtvorrichtungen (32, 38) zu lenken.

15. Ventil nach Anspruch 13, dadurch **gekennzeichnet**, daß es Lagemeßfühler für die Küken aufweist, die die Steuerung zum Zurückziehen der Abdichtvorrichtungen (32, 38) lenken.

16. Ventil nach irgendeinem der Ansprüche 1 bis 15, dadurch **gekennzeichnet**, daß die Drehachsen (71, 72) des ersten und zweiten Kükens (5, 6) voneinander getrennt sind, wenn sie auch zueinander naheliegen.

17. Ventil nach irgendeinem der Ansprüche 1 bis 15, dadurch **gekennzeichnet**, daß das erste und zweite Küken (5, 6) zusammenfallende Drehachsen (7) aufweisen.

18. Ventil nach irgendeinem der Ansprüche 1 bis 17, dadurch **gekennzeichnet**, daß es Strömungsmittel-Eintritts- und Austritts-Leitungsstücke (3, 4) aufweist, die koaxial sind.

19. Ventil nach irgendeinem der Ansprüche 1 bis 17, dadurch **gekennzeichnet**, daß es Strömungsmittel-Eintritts- und -Austritts-Leitungsstücke (3, 4) aufweist, die unterschiedliche Richtungen aufweisen.

20. Ventil nach irgendeinem der Ansprüche 1 bis 19, dadurch **gekennzeichnet**, daß das erste und zweite Mittel (17, 25) zum Drehantrieb für das erste und zweite Küken (5, 6) auf den diametral gegenüberliegenden Seiten des Ventilgehäuses (1) gelegen sind.

21. Ventil nach irgendeinem der Ansprüche 1 bis 19, dadurch **gekennzeichnet**, daß das erste und zweite Mittel (17, 25) zum Drehantrieb des ersten und zweiten Kükens (5, 6) auf derselben Seite des Ventilgehäuses (11) gelegen sind.

22. Ventil nach Anspruch 1, dadurch **gekennzeichnet**, daß es eine Steuervorrichtung aufweist, die den Befehl des Schließens des einen (5) des ersten und zweiten Kükens mit vorbestimmter Verzögerung in bezug auf den Befehl zum Schließen des anderen Kükens (6) auslöst, sowie unter der Bedingung, daß das Nicht-Schließen dieses anderen Kükens (6) am Ende dieser vorbestimmten Verzögerung erfaßt wird.

23. Ventil nach Anspruch 1, dadurch **gekennzeichnet**, daß das erste und zweite Küken (5, 6) Küken mit einer etwa konstanten Dicke und mit glatten Wänden sind.

24. Ventil nach Anspruch 1, dadurch **gekennzeichnet**, daß das erste und zweite Küken (5, 6) Aussteifungen (44) besitzen.

25. Ventil nach Anspruch 24, dadurch **gekennzeichnet**, daß das erste und zweite Küken (5, 6) sich schneidende Aussteifungen (44) besitzen, die eine Kastenstruktur bilden.

26. Redundanz-Steuervorrichtung für den Durchtritt von Strömungsmittel in einer Hauptleitung, dadurch **gekennzeichnet**, daß sie einen Einsatz im Umlauf der genannten Hauptleitung (51, 52) aufweist, mit einem Umlauf, der zwei parallele Zweige (A, B) aufweist, die jeweils mit einem Redundanz-Absperrventil nach irgendeinem der Ansprüche 1 bis 25 ausgestattet sind.

## Claims

1. A valve with redundancy on closing comprising a single valve body (1), first and second valve members (5, 6) disposed inside said valve body (1) and each including an orifice (11,20) allowing fluid to pass therethrough, independent first and second rotary drive means (17, 25) for the first and second valve members (5,6) and a first sealing device cooperating with one of the first and second valve members (5,6), characterized in that the first and second valve members (5, 6) both are hollow, substantially hemispherical, nestable inside the other and have different diameters, and in that it comprises first and second sealing devices (32,38) each comprising at least one annular gasket (27, 33) and respectively associated to the first and second valve members (5, 6).

2. A valve according to claim 1, characterized in that it includes means for lifting off the first and second sealing devices (32, 38) while the first and second valve members (5, 6) are rotating.

3. A valve according to claim 1, characterized in that one of the sealing devices is not retractable, and comprises a sealing gasket constituted by a lip gasket, while the other of the first and second sealing devices (32, 38) is retractable, means (39, 40, 41) being provided to retract the retractable sealing device for the purpose of preventing fluid becoming confined inside the valve.

4. A valve according to claim 3, characterized in that the retractable sealing device (32) is situated in the vicinity of the upstream, first valve member (5) and is controlled as a function of the position of the downstream, second valve member (6) such that said retractable sealing device (32) is in its closed position when the second valve member (6) is open, and vice versa.

5. A valve according to claim 4, characterized in that it comprises a cam secured to the second valve member (6) to control retraction of the retractable sealing device (32) situated in the vicinity of the first valve member (5).

6. A valve according to claim 3, characterized in that the retractable sealing device (38) is situated in the vicinity of the downstream second valve member (6) and is controlled as a function of the position of the upstream, first valve member (5) such that said retractable sealing device i(38) is in its closed position when the first valve member (5) is open, and vice versa.

7. A valve according to claim 6, characterized in that it comprises a cam secured to the first valve member (5) to control retraction of the retractable sealing device (38) situated in the vicinity of the second valve member (6).

8. A valve according to any one of claims 1 and 2, characterized in that the first and second sealing devices (32, 38) are retractable and are interconnected by at least one spacer (41) disposed inside the first and second valve members (5, 6), such that when one of the first and second sealing devices (32 or 38) is open, the other sealing device (38 or 32) is closed.

9. A valve according to claim 8, characterized in that the means (39, 40) for retracting the retractable sealing device (32) co-operating with the upstream, first valve member (5) are controlled directly or indirectly by the position of said first valve member (5) cooperating with said sealing device (32).

10. A valve according to claim 9, characterized in that the means (39, 40) for retracting the retractable sealing device (32) co-operating with the first valve member (5) comprise a cam (40) whose position is defined by the position of said first valve member (5) co-operating with said sealing device (32), the profile of the cam (40) being such that closing the first valve member (5) causes said sealing device (32) to close, while opening the first valve member (5) causes said sealing device (32) to open.

11. A valve according to claim 8, characterized in that the means for retracting the retractable sealing device (38) co-operating with the downstream, second valve member (6) are controlled directly or indirectly by the position of said second valve member (6) co-operating with said sealing device (38).

12. A valve according to claim 11, characterized in that the means for retracting the retractable sealing device (38) co-operating with the second valve member (6) comprise a cam whose position is defined by the position of said second valve member (6) co-operating with said sealing device (38), the profile of the cam being such that closing the second valve member (6) causes said sealing device (38) to close, while opening the second valve member (6) causes said sealing device (38) to open.

13. A valve according to any one of claims 4, 6, 9 and 11, characterized in that the sealing device (32, 38) are caused to retract by a command from specific actuators that do not receive energy from either of the valve members, such as mechanical, hydraulic, pneumatic, electrical, or pyrotechnic control means.

14. A valve according to claim 13, characterized in that at least one pressure sensor situated in a length of inlet or outlet duct in the proximity of one of the first and second valve members to control retraction of the sealing devices (32, 38).

15. A valve according to claim 13, characterized in that it includes valve member position sensors controlling the retraction of the sealing devices (32, 38).

16. A valve according to any one of claims 1 to 15, characterized in that the axes of rotation (71, 72) of the first and second valve members (5, 6) are distinct although close together.

17. A valve according to any one of claims 1 to 15, characterized in that the first and second valve members (5, 6) have axes of rotation (7) that coincide.

18. A valve according to any one of claims 1 to 17, characterized in that it includes inlet and outlet lengths (3,4) of fluid duct that are in alignment.

19. A valve according to any one of claims 1 to 17, characterized in that it includes inlet and outlet lengths (3, 4) of fluid duct extending in different directions.

20. A valve according to any one of claims 1 to 19, characterized in that the first and second means (17, 25) for driving the first and second valve members (5, 6) in rotation are situated on diametrically opposite sides of the valve body.

21. A valve according to any one of claims 1 to 19, characterized in that the first and second means (17, 25) for driving the first and second valve members (5, 6) in rotation are situated on the same side (11) of the valve body.

22. A valve according to claim 1, characterized in that it includes a monitor device triggering closure of one (5) of the first and second valve members with a predetermined time delay relative to the command to close the other valve member (6), and in the event that non-closure of said other valve member (6) is detected at the end of said predetermined time delay.

23. A valve according to claim 1, characterized in that the first and second valve members (5,6) are members of approximately constant thickness having smooth walls.

24. A valve according to claim 1, characterized in that the first and second valve members (5, 6) include stiffeners (44).

25. A valve according to claim 24, characterized in that the first and second valve members (5, 6) possess stiffeners (44) in a criss-cross mesh constituting cells.

26. A redundant assembly for controlling the flow of fluid through a main duct, characterized in that it comprises a circuit for insertion in said main duct (51, 52), which circuit comprises two branches in parallel (A, B) each of which is fitted with a valve having redundancy on closing according to any one of claims 1 to 25.
